# EUROPÄISCHE PATENTSCHRIFT

(11) **EP 0 731 068 B1**
(45) Veröffentlichungstag und Bekanntmachung des Hinweises auf die Patenterteilung: **23.05.2001**
(21) Anmeldenummer: 96103692.8
(22) Anmeldetag: 08.03.1996
(51) Int. Cl.: C05F 3/00, A01C 3/00, C02F 1/00, A61L 9/01

(54) **Verfahren zur Bindung von Ammoniak und/oder Schwefelwasserstoff in Gülle**
Process for binding ammonia and/or hydrogen sulphide in manure
Procédé destiné à fixer de l'ammoniac et du sulfure d'hydrogène dans des lisiers

(30) Priorität: 09.03.1995 DE 19508460
(43) Veröffentlichungstag der Anmeldung: 11.09.1996
(73) Patentinhaber: K + S Aktiengesellschaft, 34119 Kassel (DE)
(72) Erfinder: Jürgens, Geerd Friedrich, Dr., 67105 Schifferstadt (DE); Czikkely, Vilmos, Dr., 68167 Mannheim (DE)

(56) Entgegenhaltungen:
- EP-A- 0 164 818
- EP-A- 0 617 971
- DE-A- 2 321 742
- US-A- 5 039 481
- CHEMICAL ABSTRACTS, vol. 97, no. 4, 26.Juli 1982 Columbus, Ohio, US; abstract no. 28163, HITACHI KIDEN KOGYO K.K.: "Envirommental deodorants" XP002047673 & JP 57 049 456 A

## Beschreibung

Ammoniak- und schwefelwasserstoffhaltige Flüssigkeiten treten in der Landwirtschaft und in verschiedenen Bereichen der Industrie als Lösungen oder Suspensionen auf. Insbesondere in der Rinderhaltung fällt Gülle in großen Mengen an, die nur während bestimmter Zeitabschnitte der Vegetationsperiode ausgebracht werden kann. Während der Lagerung der Gülle entstehen Ammoniak und Schwefelwasserstoff, die als Gase aus der Gülle entweichen. Das führt einerseits zu Nährstoffverlusten durch Entzug von Stickstoff aus der Gülle und andererseits zu Geruchsbelästigungen durch Duftstoffe organischer Natur, die die entweichenden Gase als Trägersubstanzen benutzen. Es ist deshalb wünschenswert, das Entweichen von Ammoniak- und/oder Schwefelwasserstoffgasen aus Gülle oder anderen organischen Lösungen und Suspensionen zu unterbinden.

Durch Zusatz starker Mineralsäuren wie HNO₃, H₂SO₄ oder H₃PO₄ kann Ammoniak in ammoniakhaltigen Flüssigkeiten gebunden werden. Ein derartiges Verfahren ist in dem belgischen Patent BE 832 371 beschrieben. Die Zugabe starker Mineralsäuren hat jedoch den Nachteil, daß bereits eine geringe Überdosierung den pH-Wert von Gülle zu stark sauren Werten hin verschiebt, so daß eine Verätzung der Pflanzen bei der Ausbringung der Gülle auftritt.

Die japanischen Patentschriften J 5 4005-041 und J 6 1232-855 schlagen den Zusatz organischer Säuren wie Zitronensäure, Maleinsäure, L-Ascorbinsäure, Malonsäure, Fumarsäure, Glutarsäure oder Oxalsäure zu ammoniakhaltigen Flüssigkeiten vor. Die Verwendung einer Mischung aus L-Ascorbinsäure und Eisensulfat, Eisendichlorid oder Eisendinitrat in einem wäßrigen Gel wird in dem japanischen Patent J 6 3079-660 dargestellt. Nachteil dieser Zusätze ist ihr hoher Preis, so daß ihre Anwendung keine praktische Bedeutung erlangt hat.

In der europäischen Patentanmeldung EP 0 076 447 wird ein Zusatz zur Einstreu in Tierställen bereitgestellt, der eine Mischung aus einer konservierend wirkenden organischen Säure und Harnstoffphosphat, Phosphorsäure, Schwefelsäure oder einem Alkalimetallhydrogensulfat enthält. Nachteilig ist hierbei sowohl der hohe Preis, wie auch die erhöhten Anforderungen an die Dosierung des Zusatzes im Hinblick auf die pflanzenbiologische Verträglichkeit der Gülle.

In US-A-5039481 wird eine Mischung aus Oxalsäure und Zitronensäure zur Bindung von Ammoniak- und Schwefelwasserstoff offenbart.

Aufgabe der Erfindung ist deshalb die Bereitstellung eines Verfahrens und eines Mittels zur wirksamen Bindung von Ammoniak und/oder Schwefelwasserstoff in Gülle, die kostengünstig sind und geringe Anforderungen an die Genauigkeit der Dosierung stellen.

Die erfindungsgemäße Aufgabe wird durch das in den Ansprüchen beschriebene Verfahren gelöst. Dabei wird der ammoniak- und/oder schwefelwasserstoffhaltigen Gülle, ein fester oder flüssiger Zusatz beigemengt, der ein Gemisch bestehend aus mindestens zwei Carbonsäuren und mindestens einer Eisenverbindung, wobei das Gewichtsverhältnis des Carbonsäuregemisches zu den Eisenverbindungen 15:1 bis 1:15 beträgt, und wobei das Gemisch von mindestens zwei Carbonsäuren eine aliphatische Mono- oder Dicarbonsäure mit einer Kettenlänge von C₄ bis C₆ enthält. Dabei werden die Kohlenstoffatome der Carboxylgruppen mitgezählt. Vorzugsweise enthält der Zusatz Eisen-II-sulfat. Bei einem weiteren bevorzugten Verfahren wird der Zusatz so lange beigemengt, bis der pH-Wert der Flüssigkeit um mindestens 0,2 sinkt.

Die Aufgabe der Erfindung wird auch durch die Bereitstellung eines festen oder flüssigen Mittels zur Bindung von Ammoniak und/oder Schwefelwasserstoff in Gülle, erfüllt, wobei das Mittel ein Gemisch von mindestens zwei Carbonsäuren enthält. Das Mittel enthält mindenstens eine aliphatische Mono- oder Dicarbonsäure mit einer Kettenlänge von C₄ bis C₆ und mindestens eine Eisenverbindung, wobei das Gewichtsverhältnis des Carbonsäuregemisches zu den Eisenverbindungen 15:1 bis 1:15 beträgt. Weiter bevorzugt ist ein Mittel, das Eisen-II-sulfat enthält.

Erfindungsgemäß wird auch eine ammoniak- und/oder schwefelwasserstoffhaltige Gülle, vorgestellt, die infolge der Zugabe eines festen oder flüssigen Zusatzes ein Gemisch von mindestens zwei Carbonsäuren, mindestens eine Eisenverbindung, wobei das Gewichtsverhältnis des Carbonsäuregemisches zu den Eisenverbindungen 15:1 bis 1:15 beträgt, und mindestens eine aliphatische Mono- oder Dicarbonsäure mit einer Kettenlänge von C₄ bis C₆ enthält. Weiter bevorzugt ist eine Gülle, die infolge der Zugabe eines Zusatzes Eisen-II-sulfat enthält.

Erfindungsgemäß kann eines der oben beschriebenen Mittel zur Erhöhung der Homogenität und Fließfähigkeit und zur Verminderung der Schwimmdecken- und Geruchsbildung bei ammoniakhaltigen und/oder schwefelwasserstoffhaltigen Gülle, verwendet werden.

Die der ammoniak- und/oder schwefelwasserstoffhaltigen Flüssigkeit zugesetzten Säuren sind relativ schwach, so daß bei einer Überdosierung nur geringe Verätzungsgefahr besteht. Andererseits neigen ihre Ammoniumsalze zur Hydrolyse, insbesondere im pH-Bereich um 5, so daß bei den angestrebten pH-Werten Ammoniak wieder freigesetzt wird. Überraschend ist daher, daß durch ein Gemisch von Carbonsäuren enthaltend mindenstens eine aliphatische Mono- oder Dicarbonsäure mit einer Kettenlänge von C₄ bis C₆ in Kombination mit Eisenverbindungen, die Ammoniak- und Schwefelwasserstoffemission aus Gülle deutlich reduziert werden kann. Erfahrungsgemäß führt die richtige Dosierung des Zusatzes zu einer Absenkung des pH-Wertes um mindestens 0,2.

Durch den Zusatz der beschriebenen Säuregemische werden Vorteile hinsichtlich des Umweltverhaltens, des Nährstoffeintrags sowie der Homogenität und Fließfähigkeit der Gülle, erzielt. Die Neigung zur Schwimmdeckenbildung und Geruchsemission wird reduziert.

Die verwendeten organischen Säuren sind vollständig abbaubar und stellen in der Kombination mit Eisensulfat keine Umweltbelastung dar. Durch eine Verringerung der Emissionen von gasförmigem Ammoniak und Schwefelwasserstoff wird die Schadstoffbelastung der Luft vermindert und ebenso Geruchsbildung abgebaut. Die Ausbringung von säurebehandelter Gülle führt außerdem zu verbessertem Nährstoffeintrag in den Boden, da Stickstoff, Eisen und Sulfate mit dem Säuregemisch zugeführt werden. Letzteres gilt vor allem bei Verwendung von Eisensulfat als Eisenverbindung in dem Säuregemisch. Eine verbesserte Düngewirkung wird vor allem dann erzielt, wenn Ammoniak- und Stickstoffverluste bei Lagerung, Transport und Ausbringung vermieden werden.

Das flüssige Säuregemisch ist, ebenso wie die einzelnen Komponenten, einfach und sicher in Kunststoffkanistern zu lagern. Feste Säuregemische und Eisensulfat können auch in Papiersäcken aufbewahrt werden, ohne eine Umweltgefährdung darzustellen. Dabei entfällt die aufwendige Entsorgung von gebrauchten Säurekanistern.

### Beispiel 1

500 ml Rindergülle einer ersten Zusammensetzung wurden mit einem Dicarbonsäuregemisch, das verschiedene Mengen an Eisensulfat enthielt, versetzt. Das Carbonsäuregemisch bestand zu etwa 20 bis 30% aus Butandisäure (Bernsteinsäure), zu etwa 40 bis 60% aus Pentandisäure (Glutarsäure) und zu etwa 20 bis 30% aus Hexandisäure (Adipinsäure). In Abhängigkeit von der Zeit wurde dann die Ammoniak- und Schwefelwasserstoffkonzentration über der Flüssigkeitsoberfläche gemessen. Tabelle 1 zeigt die dabei gewonnenen Ergebnisse.

Die Ammoniakemission wird durch die alleinige Zugabe von Carbonsäuregemischen bereits deutlich reduziert, während die alleinige Zugabe von Eisensulfat nur bei hohen Dosierungen zu dem gewünschten Effekt führt. Dagegen kann die Schwefelwasserstoffemission bereits mit geringeren Mengen Eisensulfat herabgesetzt werden. Sowohl bezüglich der Ammoniakemission, als auch hinsichtlich der Schwefelwasserstoffemission zeigt sich ein deutlicher synergistischer Effekt zwischen dem Carbonsäuregemisch und Eisensulfat.

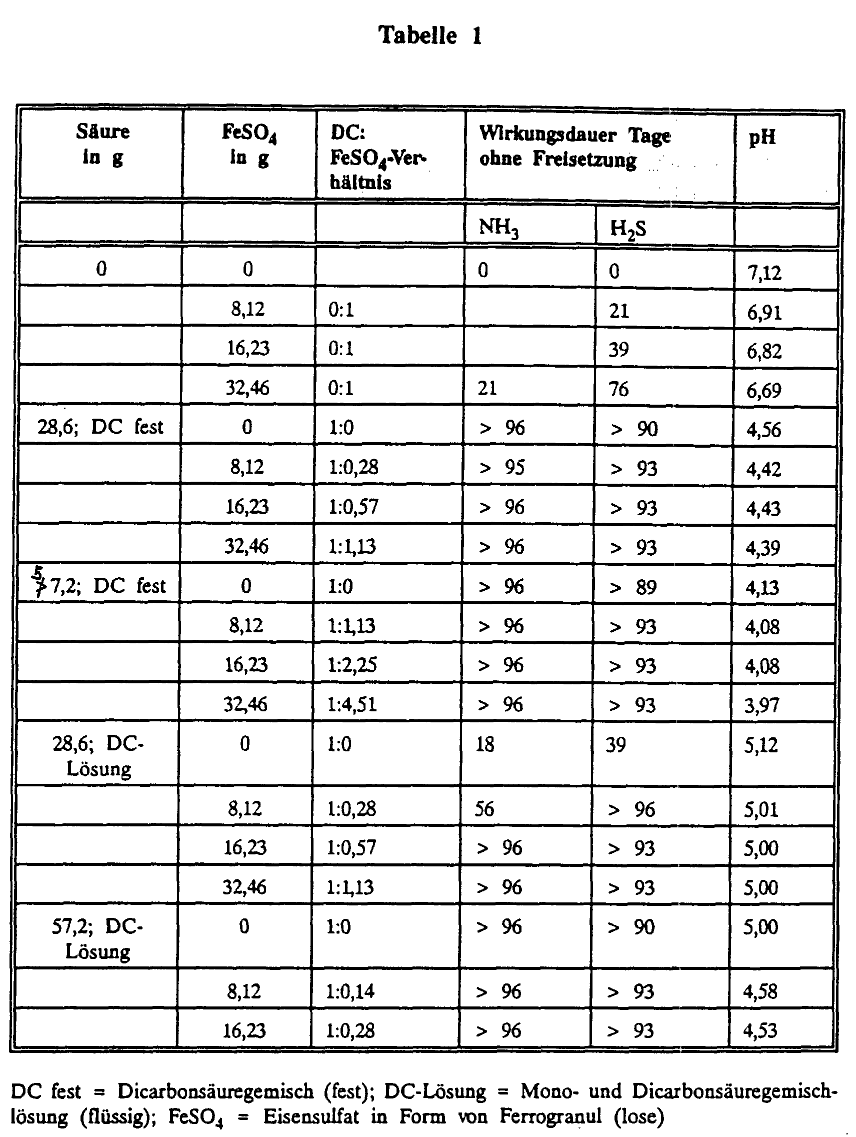

### Beispiel 2

500 ml Rindergülle wurden mit dem in Beispiel 1 angegebenen Carbonsäuregemisch versetzt, das verschiedene Mengen Eisensulfat enthielt. Anschließend wurde die Ammoniak- und Schwefelwasserstoffkonzentration über der Flüssigkeitsoberfläche in Abhängigkeit von der bereits verstrichenen Zeitdauer gemessen. Die Ergebnisse sind in Tabelle 2 dargestellt.

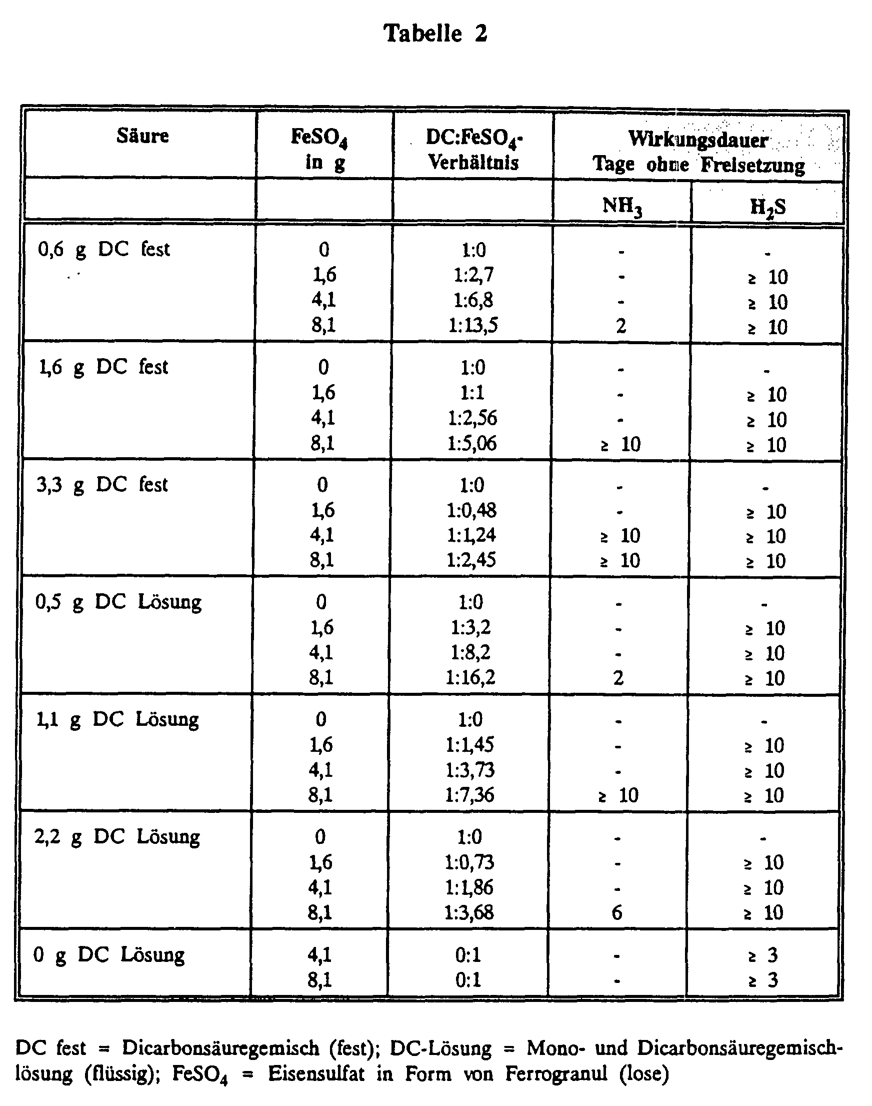

Daraus wird die synergistische Wirkung von Dicarbonsäuren und Eisensulfat nochmals deutlich. Aus den Werten ergibt sich wie in Beispiel 1, daß die Bindung von Ammoniak wesentlich höhere Mengen an Eisensulfat erfordert als die Bindung von Schwefelwasserstoff.

### Beispiel 3

In Tabelle 3 wird der Einfluß des Mischungsverhältnisses der festen Dicarbonsäuren der in Beispiel 1 angegebenen Mischung mit dem Eisensulfat bei verschiedenen Zugabemengen zu 500 ml Rindergülle einer dritten Zusammensetzung dargestellt.

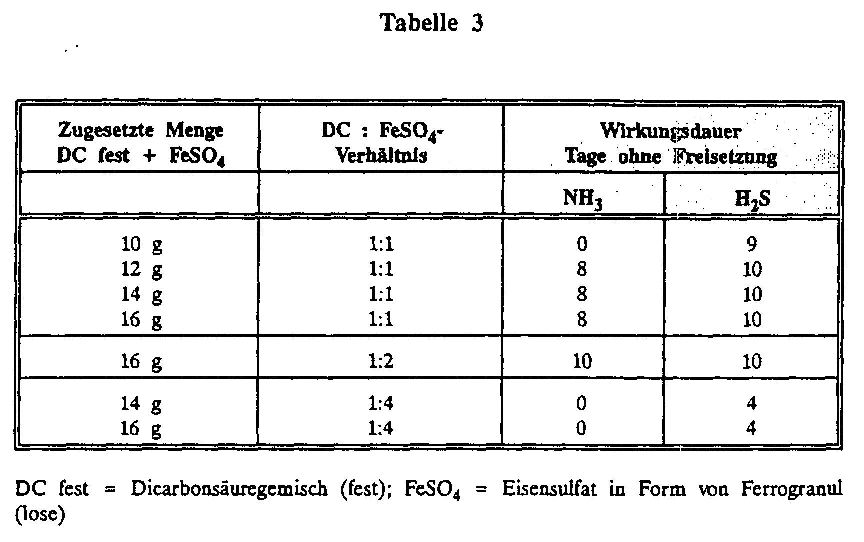

Daraus wird ersichtlich, daß ein optimales Ergebnis in einem Zusammensetzungsbereich erzielt wird, in dem die Mischung etwa einen Gewichtsanteil Dicarbonsäuren und zwei Gewichtsanteile Eisensulfat enthält.

### Beispiel 4

500 ml Schweinegülle einer ersten Zusammensetzung wurden mit verschiedenen Dicarbonsäure-Eisensulfatgemischen versetzt. Die Zusammensetzung des Dicarbonsäuregemisches entspricht der in Beispiel 1 angegebenen Mischung. Anschließend wurde die Zeitdauer bis zur Freisetzung von Ammoniak oder Schwefelwasserstoff in Tagen gemessen. Die Ergebnisse sind in Tabelle 4 dargestellt.

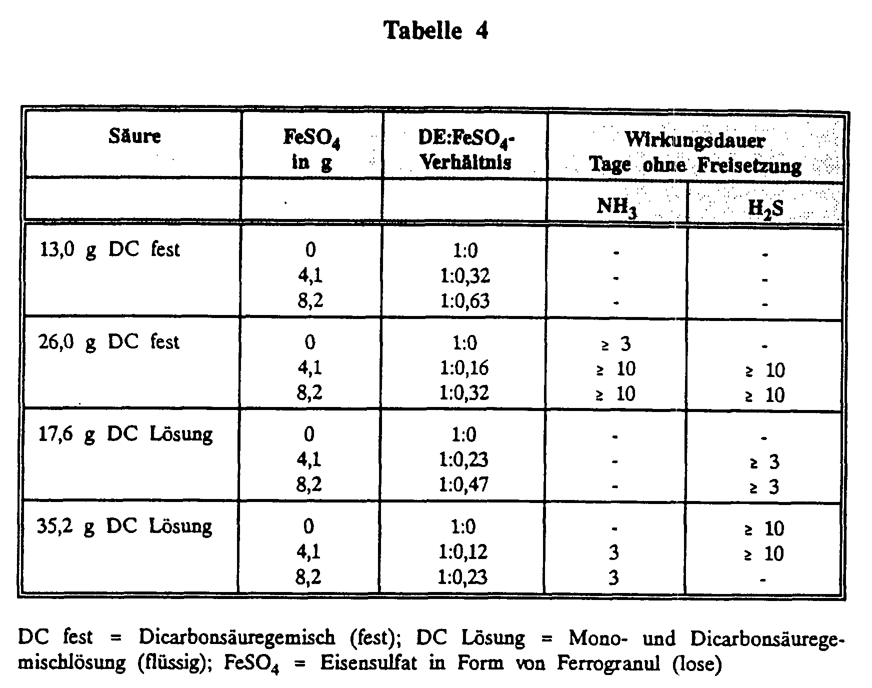

Auch hier ist im allgemeinen Schwefelwasserstoff leichter zu binden als Ammoniak. Aus einem Vergleich mit Tabelle 2 ergibt sich außerdem, daß Schweinegülle höhere Säureanteile erfordert als Rindergülle.

### Beispiel 5

500 ml Proben von Gülle aus der Rinder- und Schweinehaltung mit unterschiedlicher Zusammensetzung wurden mit einem Gemisch von festen Dicarbonsäuren nach Beispiel 1, dem Eisensulfat in unterschiedlichen Mengen beigegeben war, versetzt. Anschließend wurde wieder die Zeitdauer bis zum Entweichen von gasförmigem Ammoniak bzw. Schwefelwasserstoff gemessen. Die Ergebnisse sind in Tabelle 5 zusammengestellt.

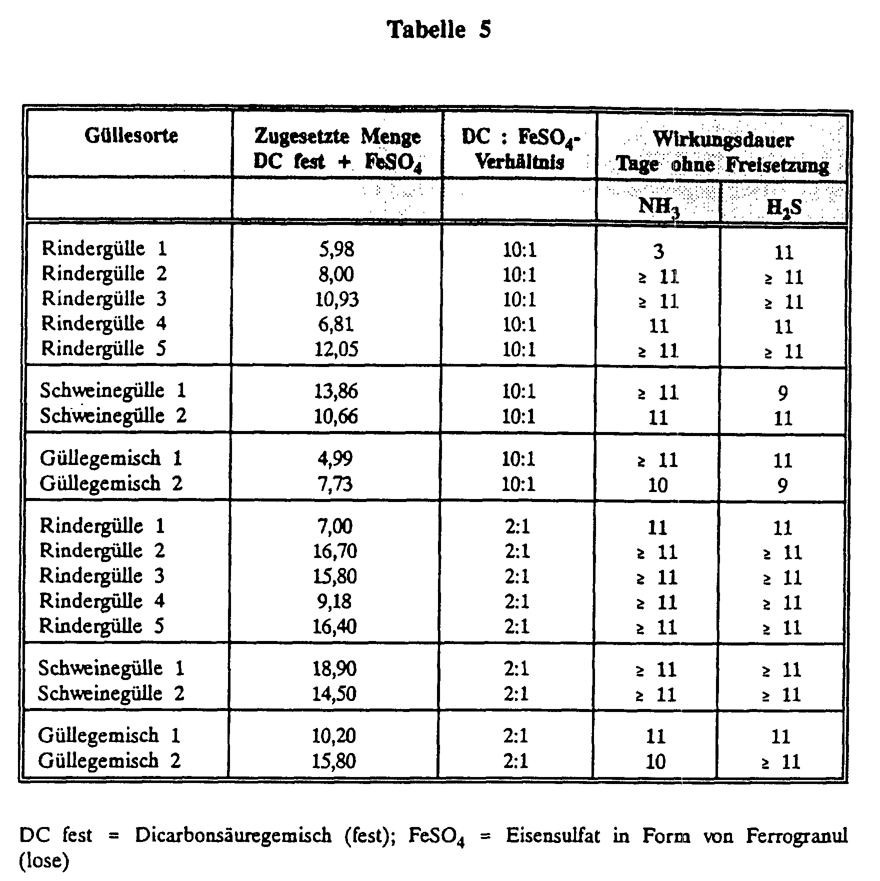

Aus diesen Versuchsergebnissen ist ersichtlich, daß die wirksame Aufwandmenge der Zusatzmischung auch stark von der Art und Zusammensetzung der Gülle abhängt. Erwartungsgemäß sind zur Langzeitstabilisierung höhere Aufwandmengen nötig als zur kurzzeitigen Reduzierung von Ammoniak- und/oder Schwefelwasserstoffemissionen.

## Patentansprüche

1. Verfahren zur Bindung von Ammoniak und/oder Schwefelwasserstoff in Gülle, wobei der Flüssigkeit ein fester oder flüssiger Zusatz beigemengt wird, der ein Gemisch von mindestens zwei Carbonsäuren enthält, dadurch gekennzeichnet, daß der Zusatz mindestens eine aliphatische Mono- oder Dicarbonsäure mit einer Kettenlänge von C₄ bis C₆ und weiterhin mindestens eine Eisenverbindung enthält, wobei das Gewichtsverhältnis des Carbonsäuregemisches zu den Eisenverbindungen 15:1 bis 1:15 beträgt.

2. Verfahren nach Anspruch, dadurch gekennzeichnet, daß der Zusatz Eisen-II-sulfat enthält.

3. Verfahren nach einem der vorhergehenden Ansprüche, dadurch gekennzeichnet, daß der Zusatz solange beigemengt wird bis der pH-Wert der Flüssigkeit um mindestens 0,2 sinkt.

4. Ammoniakhaltige und/oder schwefelwasserstoffhaltige Gülle, die infolge der Zugabe eines festen oder flüssigen Zusatzes ein Gemisch von mindestens zwei Carbonsäuren enthält, dadurch gekennzeichnet, daß sie infolge der Zugabe des Zusatzes mindestens eine aliphatische Mono- oder Dicarbonsäure mit einer Kettenlänge von C₄ bis C₆ und weiterhin mindestens eine Eisenverbindung enthält, wobei das Gewichtsverhältnis des Carbonsäuregemisches zu den Eisenverbindungen 15:1 bis 1:15 beträgt.

5. Flüssigkeit nach Anspruch 4, dadurch gekennzeichnet, daß sie infolge der Zugabe des Zusatzes mindestens eine aliphatische Mono- oder Dicarbonsäure mit einer Kettenlänge von C₄ bis C₆, und mindestens eine aliphatische Mono- oder Dicarbonsäure mit einer Kettenlänge von C₁ bis C₆, vorzugsweise von C₄ bis C₆ enthält.

6. Flüssigkeit nach einem der Ansprüche 4 oder 5, dadurch gekennzeichnet, daß sie infolge der Zugabe des Zusatzes Eisen-II-sulfat enthält.

7. Festes oder flüssiges Mittel zur Bindung von Ammoniak und/oder Schwefelwasserstoff in Gülle, enthaltend ein Gemisch von mindestens zwei Carbonsäuren, dadurch gekennzeichnet, daß es mindestens eine aliphatische Mono- oder Dicarbonsäure mit einer Kettenlänge von C₄ bis C₆ und weiterhin mindestens eine Eisenverbindung enthält, wobei das Gewichtsverhältnis des Carbonsäuregemisches zu den Eisenverbindungen 15:1 bis 1:15 beträgt.

8. Mittel nach Anspruch 7 dadurch gekennzeichnet, daß es Eisen-II-sulfat enthält.

9. Verwendung eines Mittels nach Anspruch 7 oder 8 zur Erhöhung der Homogenität und Fließfähigkeit und zur Verminderung der Schwimmdecken- und Geruchsbildung bei Gülle.

## Claims

1. A process for the binding of ammonia and/or hydrogen sulfide in liquid manure, in which a solid or liquid additive which contains a mixture of at least two carboxylic acids is added to the liquid, characterized in that the additive contains at least one aliphatic mono- or dicarboxylic acid having a chain length of from C₄ to C₆ and furthermore at least one iron compound, the weight ratio of the carboxylic acid mixture to the iron compounds being from 15:1 to 1:15.

2. A process as claimed in claim 1, characterized in that the additive contains iron (II) sulfate.

3. A process as claimed in one of the preceding claims, characterized in that the additive is added until the pH of the liquid falls by at least 0.2.

4. An ammonia-containing and/or hydrogen sulfide-containing liquid manure, which as a result of the addition of a solid or liquid additive contains a mixture of at least two carboxylic acids, characterized in that as a result of the addition of the additive it contains at least one aliphatic mono- or dicarboxylic acid having a chain length of from C₄ to C₆ and furthermore at least one iron compound, the weight ratio of the carboxylic acid mixture to the iron compounds being from 15:1 to 1:15.

5. A liquid as claimed in claim 4, characterized in that as a result of the addition of the additive it contains at least one aliphatic mono- or dicarboxylic acid having a chain length of from C₄ to C₆, and at least one aliphatic mono- or dicarboxylic acid having a chain length of from C₁ to C₆, preferably from C₄ to C₆.

6. A liquid as claimed in either of claims 4 and 5, characterized in that as a result of the addition of the additive it contains iron(II) sulfate.

7. A solid or liquid composition for the binding of ammonia and/or hydrogen sulfide in liquid manure, containing a mixture of at least two carboxylic acids, characterized in that it contains at least one aliphatic mono- or dicarboxylic acid having a chain length of from C₄ to C₆ and furthermore at least one iron compound, the weight ratio of the carboxylic acid mixture to the iron compounds being from 15:1 to 1:15.

8. A composition as claimed in claim 7, characterised in that it contains iron(II) sulfate.

9. The use of a composition as claimed in claim 7 or 8 5 for increasing the homogeneity and flowability and for decreasing the formation of surface scum and odor in liquid manure.

## Revendications

1. Procédé pour la fixation d'ammoniac et/ou d'acide sulfhydrique dans du lisier, dans lequel on mélange au liquide un additif solide ou liquide, qui contient un mélange d'au moins deux acides carboxyliques, caractérisé par le fait que l'additif contient au moins un acide mono- ou dicarboxylique aliphatique ayant une longueur de chaîne de C₄ à C₆ et en outre au moins un composé du fer, tandis que le rapport en poids du mélange d'acides carboxyliques aux composés du fer vaut 15:1 à 1:15.

2. Procédé selon la revendication 1, caractérisé par le fait que l'additif contient du sulfate de fer-II.

3. Procédé selon l'une des revendications précédentes, caractérisé par le fait que l'additif est introduit jusqu'à ce que la valeur du pH du liquide descende d'environ au moins 0,2.

4. Lisier contenant de l'ammoniac et/ou de l'acide sulfhydrique, qui contient un mélange d'au moins deux acides carboxyliques à la suite de l'adjonction d'un additif solide ou liquide, caractérisé par le fait que, par suite de l'adjonction de l'additif, il contient au moins un acide mono- ou dicarboxylique aliphatique ayant une longueur de chaîne de C₄ à C₆ et en outre au moins un composé du fer, tandis que le rapport en poids du mélange d'acides carboxyliques aux composés du fer vaut 15:1 à 1:15.

5. Liquide selon la revendication 4, caractérisé par le fait que, par suite de l'adjonction de l'additif, il contient au moins un acide mono- ou dicarboxylique aliphatique ayant une longueur de chaîne de C₄ à C₆, et au moins un acide mono- ou dicarboxylique aliphatique ayant une longueur de chaîne de C₁ à C₆, de préférence de C₄ à C₆.

6. Liquide selon l'une des revendications 4 ou 5, caractérisé par le fait que, par suite de l'adjonction de l'additif, il contient du sulfate de fer-II.

7. Moyen solide ou liquide pour la fixation d'ammoniac et/ou d'acide sulfhydrique dans du lisier, contenant un mélange d'au moins deux acides carboxyliques, caractérisé par le fait qu'il contient au moins un acide mono- ou dicarboxylique aliphatique ayant une longueur de chaîne de C₄ à C₆ et en outre au moins un composé du fer, tandis que le rapport en poids du mélange d'acides carboxyliques aux composés du fer vaut 15:1 à 1:15.

8. Moyen selon la revendication 7, caractérisé par le fait qu'il contient du sulfate de fer-II.

9. Utilisation d'un moyen selon la revendication 7 ou 8 pour accroître l'homogénéité et la fluidité et pour abaisser la formation d'un chapeau surnageant et d'odeur dans le lisier.
